# EUROPEAN PATENT SPECIFICATION

(11) **EP 4 366 278 B1**
(45) Date of publication and mention of the grant of the patent: **20.08.2025**
(21) Application number: 23206180.4
(22) Date of filing: 26.10.2023
(51) Int. Cl.: H04L 67/56, H04L 67/563, H04L 69/40, H04W 4/50

(54) **HANDLING OF REQUESTS IN UNSUCCESSFUL INDIRECT COMMUNICATION**
HANDHABUNG VON ANFRAGEN BEI ERFOLGLOSER INDIREKTER KOMMUNIKATION
GESTION DE DEMANDES DANS UNE COMMUNICATION INDIRECTE INFRUCTUEUSE

(30) Priority: 03.11.2022 GB 202216356
(43) Date of publication of application: 08.05.2024
(73) Proprietor: Nokia Solutions and Networks Oy, 02610 Espoo (FI)
(72) Inventor: CHALOULOS, Klearchos, 14121 Irakleio Attikis (GR); STAIS, Charilaos, 11471 Athens (GR); SARAFI, Angeliki, 14123 Lykovrysi (GR)
(74) Representative: Nokia EPO representatives

(56) References cited:
- WO-A1-2022/022842
- "3rd Generation Partnership Project; Technical Specification Group Core Network and Terminals; 5G System; Technical Realization of Service Based Architecture; Stage 3 (Release 17)", vol. CT WG4, no. V17.7.0, 23 June 2022 (2022-06-23), pages 1 - 127, XP052183212, Retrieved from the Internet <URL:https://ftp.3gpp.org/Specs/latest/Rel-17/29_series/29500-h70.zip 29500-h70.docx> [retrieved on 20220623]

## Description

### Field of the invention

The present disclosure relates to indirect communication, and in particular to handling of requests in unsuccessful indirect communication.

### Abbreviations

- 3GPP: 3^{rd} Generation Partnership Project
- 5G/6G/7G: 5^{th}/6^{th}/7^{th} Generation
- AMF: Access and Mobility Function
- CHF: Charging function
- cSEPP: consumer's SEPP
- CTF: Charging Trigger Function
- FQDN: Fully Qualified Domain Name
- HTTP: Hypertext Transfer Protocol
- ID: Identifier
- IE: Information Element
- IP: Internet Protocol
- NF: Network Function
- OAuth: Open Authorization
- PDU: Protocol Data Unit
- PLMN: Public Land Mobile Network
- SBI: Service-based Interface
- SCP: Service Communication Proxy
- SEPP: Service Edge Protection Proxy
- SMF: Session Management Function
- TS: Technical Specification
- URI: Uniform Resource Identifier
- vSEPP: visited SEPP

### Background

In 5G, 3GPP defines the indirect communication method. In this method, requests between the NFConsumer and NFProducer are routed through a Service Communication Proxy (SCP).

The SCP is responsible for selecting the NFProducer, and in cases of failure, for performing retries or reselections and NFProducer.

This document uses the following terminology:
- retry: When the HTTP2 client resends the HTTP2 request to the same or an alternative IP endpoint within the same NF Service instance (NFProducer) or to alternative IP addresses that the target FQDN resolves to.
- reselection: When the requesting NF (NFConsumer) or SCP selects a new NF (Service) Instance to send the HTTP2 request to.

A further prior art document is WO 2022/022842 A1 showing service request handling.

### Summary

It is an object of the present invention to improve the prior art. The invention is defined by an apparatus according to claim 1, an apparatus according to claim 6, a method according to claim 14, a method according to claim 15 and a computer program product according to claim 16. Further embodiments are set out in the dependent claims.

According to a first aspect of the invention, there is provided an apparatus comprising:
means for monitoring whether a proxy receives a request and a handling instruction for the request from a requester;
means for forwarding the request from the proxy to a first target if the proxy receives the request;
means for checking whether the proxy receives, in response to the forwarding the request to the first target, a success indication from the first target indicating that the request was successfully executed;
means for handling the request according to the handling instruction if the proxy receives the handling instruction and the proxy does not receive the success indication;
   wherein
the handling instruction instructs whether or not the proxy is admitted to retry to forward
the request to the first target.

The handling instruction may additionally instruct
- whether or not the proxy is admitted to reselect a second target for forwarding the request to the second target; or,
- a scope from which the proxy is admitted to reselect the second target for forwarding the request to the second target.

The apparatus may further comprise
means for informing the requester on an identifier of the first target if the proxy does not receive the success indication.

The means for receiving the success indication may be configured to receive an acknowledgment from the first target in response to the forwarding the request to the first target as the success indication.

The scope may comprise at least one of the following: a first service instance, a first service set, a first network function instance, a first set of network function instances, an exclusion of a third service instance, an exclusion of a second service set, an exclusion of a second network instance, or an exclusion of a second set of network function instances.

The proxy may comprise a service communication proxy or a service edge protection proxy.

At least one of the following may apply:
- the requester comprises a service consumer or another proxy or a client; or
- the first target comprises a service producer or a further proxy or a server.

According to a second aspect of the invention, there is provided an apparatus comprising:
means for providing, by a requester, a first request and a first handling instruction for the first request to a proxy for forwarding the first request, wherein
the first handling instruction instructs whether or not the proxy is admitted to retry to forward the first request to a first target if the proxy does not receive a first success indication indicating that the first request was successfully executed.

The handling instruction may additionally instruct
- whether or not the proxy is admitted to reselect a second target for forwarding the first request to the second target if the proxy does not receive the first success indication; or,
- a scope from which the proxy is admitted to reselect the second target for forwarding the first request to the second target if the proxy does not receive the first success indication.

The scope may comprise at least one of the following: a first service instance, a first service set, a first network function instance, a first set of network function instances, an exclusion of a third service instance, an exclusion of a second service set, an exclusion of a second network instance, or an exclusion of a second set of network function instances.

The apparatus may further comprise
means for monitoring whether the requester receives an indication from the proxy that the proxy did not receive the first success indication;
means for forming a second request based on the first request if the requester receives the indication from the proxy that the proxy did not receive the first success indication;
means for providing, by the requester, the second request and a second handling instruction to the proxy; wherein
the second handling instruction is different from the first handling instruction, and
the second handling instruction instructs at least one of the following:
   - whether or not the proxy is admitted to retry to forward the second request to a third target if the proxy does not receive a second success indication indicating that the second request was successfully executed; or
   - whether or not the proxy is admitted to reselect a fourth target for forwarding the second request to the fourth target if the proxy does not receive the second success indication; or,
   - a scope from which the proxy is admitted to reselect the fourth target for forwarding the second request to the fourth target if the proxy does not receive the second success indication.

At least one of the following may apply: the third target is the same as the first target; or the fourth target is the same as the second target; or the second request is different from the first request.

The apparatus may further comprise
means for monitoring whether the received indication from the proxy that the proxy did receive the first success indication comprises an identifier of the first target; wherein
the second handling instruction comprises the scope, and the scope comprises an exclusion of the identifier of the first target.

The requester may comprise a charging trigger function, the first request may be a first charging request, and the first request may comprise an indication whether or not the first request is a retransmission of another charging request.

The first charging request may comprise the indication that the first charging request is not a retransmission of another charging request; and

the means for forming the second request based on the first request may be configured to form the second request as a second charging request comprising the indication that the second request is a retransmission of another charging request.

The first charging request may comprise charging instructions; and the second charging request may comprise the charging instructions.

At least one of the following may apply:
- the requester comprises a service consumer or another proxy or a client; or
- the first target comprises a service producer or a further proxy or a server.

According to a third aspect of the invention, there is provided a method comprising:
monitoring whether a proxy receives a request and a handling instruction for the request from a requester;
forwarding the request from the proxy to a first target if the proxy receives the request;
checking whether the proxy receives, in response to the forwarding the request to the first target, a success indication from the first target indicating that the request was successfully executed;
if the proxy receives the handling instruction and the proxy does not receive the success indication: handling the request according to the handling instruction; wherein
the handling instruction instructs whether or not the proxy is admitted to retry to forward
the request to the first target.

The handling instruction may additionally instruct
- whether or not the proxy is admitted to reselect a second target for forwarding the request to the second target; or,
- a scope from which the proxy is admitted to reselect the second target for forwarding the request to the second target.

The method may further comprise
informing the requester on an identifier of the first target if the proxy does not receive the success indication.

The receiving the success indication may comprise receiving an acknowledgment from the first target in response to the forwarding the request to the first target.

The scope may comprises at least one of the following: a first service instance, a first service set, a first network function instance, a first set of network function instances, an exclusion of a third service instance, an exclusion of a second service set, an exclusion of a second network instance, or an exclusion of a second set of network function instances.

The proxy may comprise a service communication proxy or a service edge protection proxy.

At least one of the following may apply:
- the requester comprises a service consumer or another proxy or a client; or
- the first target comprises a service producer or a further proxy or a server.

According to a fourth aspect of the invention, there is provided a method comprising:
providing, by a requester, a first request and a first handling instruction for the first request to a proxy for forwarding the first request, wherein
the first handling instruction instructs whether or not the proxy is admitted to retry to forward the first request to a first target if the proxy does not receive a first success indication indicating that the first request was successfully executed.

The handling instruction may additionally instruct
- whether or not the proxy is admitted to reselect a second target for forwarding the first request to the second target if the proxy does not receive the first success indication; or,
- a scope from which the proxy is admitted to reselect the second target for forwarding the first request to the second target if the proxy does not receive the first success indication.

The scope may comprise at least one of the following: a first service instance, a first service set, a first network function instance, a first set of network function instances, an exclusion of a third service instance, an exclusion of a second service set, an exclusion of a second network instance, or an exclusion of a second set of network function instances.

The method may further comprise
monitoring whether the requester receives an indication from the proxy that the proxy did not receive the first success indication;
forming a second request based on the first request if the requester receives the indication from the proxy that the proxy did not receive the first success indication;
providing, by the requester, the second request and a second handling instruction to the proxy; wherein
the second handling instruction is different from the first handling instruction, and
the second handling instruction instructs at least one of the following:
   - whether or not the proxy is admitted to retry to forward the second request to a third target if the proxy does not receive a second success indication indicating that the second request was successfully executed; or
   - whether or not the proxy is admitted to reselect a fourth target for forwarding the second request to the fourth target if the proxy does not receive the second success indication; or,
   - a scope from which the proxy is admitted to reselect the fourth target for forwarding the second request to the fourth target if the proxy does not receive the second success indication.

At least one of the following may apply: the third target is the same as the first target; or the fourth target is the same as the second target; or the second request is different from the first request.

The method may further comprise
monitoring whether the received indication from the proxy that the proxy did receive the first success indication comprises an identifier of the first target; wherein
the second handling instruction may comprise the scope, and the scope may comprise an exclusion of the identifier of the first target.

The requester may comprise a charging trigger function, the first request may be a first charging request, and the first request may comprise an indication whether or not the first request is a retransmission of another charging request.

The first charging request may comprise the indication that the first charging request is not a retransmission of another charging request; and
the second request may be formed based on the first request such that the second request is a second charging request comprising the indication that the second request is a retransmission of another charging request.

The first charging request may comprise charging instructions; and the second charging request may comprise the charging instructions.

At least one of the following may apply:
- the requester comprises a service consumer or another proxy or a client; or
- the first target comprises a service producer or a further proxy or a server.

Each of the methods of the third and fourth aspects may be a method of indirect communication.

According to a fifth aspect of the invention, there is provided a computer program product comprising a set of instructions which, when executed on an apparatus, is configured to cause the apparatus to carry out the method according to any of the third or fourth aspects. The computer program product may be embodied as a computer-readable medium or directly loadable into a computer.

According to some example embodiments of the invention, at least one of the following advantages may be achieved:
- duplicate charging is avoided;
- the potentially computationally expensive procedure to check for duplication is performed only when the request is actually retransmitted;
- the SCP is agnostic of the content of the SBI request (such as the charging request);
- applicable to other requests than charging requests, too.

It is to be understood that any of the above modifications can be applied singly or in combination to the respective aspects to which they refer, unless they are explicitly stated as excluding alternatives.

### Brief description of the drawings

Further details, features, objects, and advantages are apparent from the following detailed description of the preferred embodiments of the present invention which is to be taken in conjunction with the appended drawings, wherein:
Fig. 1 illustrates an example of duplicated charging according to the prior art;
Fig. 2 illustrates an example of duplicated charging according to the prior art;
Fig. 3 illustrates an example of triplicated charging according to the prior art;
Fig. 4 illustrates a message flow according to some example embodiments of the invention;
Fig. 5 illustrates a message flow according to some example embodiments of the invention;
Fig. 6 illustrates a message flow according to some example embodiments of the invention;
Fig. 7 illustrates a message flow according to some example embodiments of the invention;
Fig. 8 shows an apparatus according to an example embodiment of the invention;
Fig. 9 shows a method according to an example embodiment of the invention; and
Fig. 10 shows an apparatus according to an example embodiment of the invention;
Fig. 11 shows a method according to an example embodiment of the invention;
Fig. 12 shows an apparatus according to an example embodiment of the invention.

### Detailed description of certain embodiments

Herein below, certain embodiments of the present invention are described in detail with reference to the accompanying drawings, wherein the features of the embodiments can be freely combined with each other unless otherwise described. However, it is to be expressly understood that the description of certain embodiments is given by way of example only, and that it is by no way intended to be understood as limiting the invention to the disclosed details.

Moreover, it is to be understood that the apparatus is configured to perform the corresponding method, although in some cases only the apparatus or only the method are described.

In indirect communication, the SCP is in control of retries and reselections if a request from a NF consumer cannot be forwarded successfully. However, the SCP does not have any knowledge of the nature of the requests, and thus does not - and should not - know whether a retry or reselection for a specific request is dangerous or not. The NFConsumer typically knows it, because the NFConsumer has knowledge of the business logic and the nature of the request.

A specific use case is charging. In this case the NFConsumer is the charging trigger function (CTF). For charging, retries are risky, as they may lead to duplicate charging. 3GPP already provides the information element (IE) "retransmissionlndicator" for this purpose. The "retransmissionlndicator" can be set by the CTF in retransmitted requests, and this instructs the CHF to perform extra processing to check whether there is duplicate charging or not. However the SCP does not - and should not - modify the body of requests, which includes the "retransmissionlndicator", if any.

Finally, even if the retransmissionlndicator is set, a CHF randomly selected in a reselection may still not be able to detect duplicates. In this case, it is preferable that the reselection is restricted within the NF Set of the CHF selected first.

There are several models of indirect communication. Model C is the indirect communication without delegated discovery. The SCP does not select the target, but it may retry and it may reselect. Model D is indirect communication with delegated discovery. In model D, SCP also discovers and selects the first target.

Hence, currently, in indirect communication (models C and D), there is an increased risk of double charging. The reason is that the SCP is expected to make retries and reselections, which may lead to the same charging request reaching the CHF NFProducer (the same or a different CHF NFProducer instance) more than once. To protect from double charging, 3GPP defines the retransmissionlndicator information element (IE) in 3GPP TS 32.291, clause 6.1.6.2.1.1. But the SCP does not set this IE in the retransmitted HTTP2 requests towards the CHF.

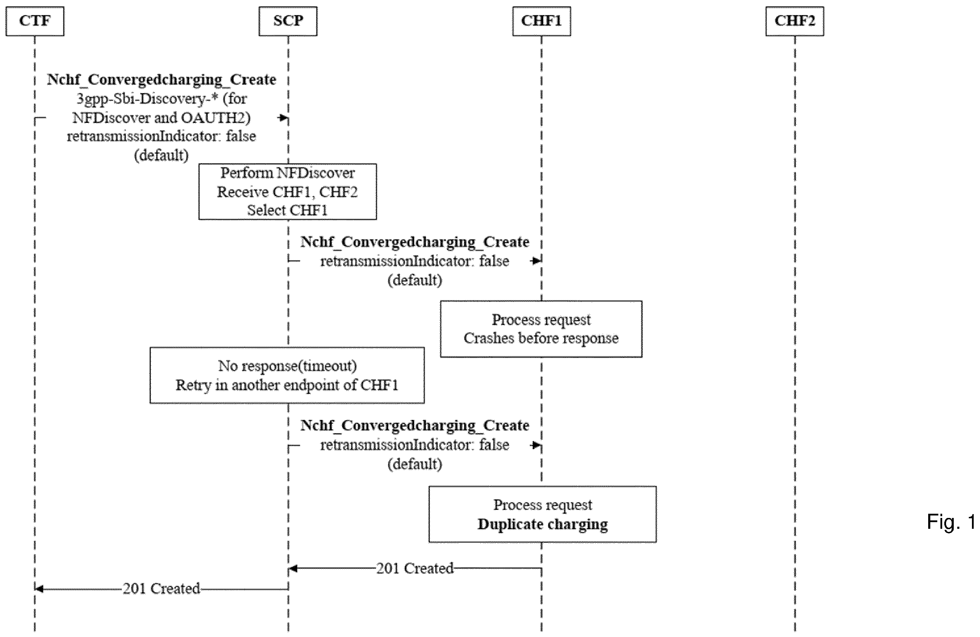

Figs. 1 to 3 illustrate example scenarios that may lead to double charging in indirect communication. In Figs. 1 to 3, the following abbreviations may be used:

| | |
|---|---|
| • Nchf_CC_Create | : Nchf_Convergedcharging_Create |
| • RI | : retransmissionlndicator |
| • Disc | : 3gpp-Sbi-Discovery-* headers, for NFDiscovery and OAUTH2 |
| • SI | : 3gpp-Sbi-Selection-Info |

In Fig. 1, the SCP forwards a charging request to CHF1. CHF1 processes the charging request, but the response is not sent back to SCP (or is lost). SCP receives no response, so SCP retries the request to an alternative endpoint of CHF1. The retransmissionlndicator is not set in the body of the request, since SCP is not responsible to alter the body of any SBI request (such as the charging request) it proxies. Thus CHF1 does not check the charging request for possibility of duplication, which results in duplicate charging by CHF1.

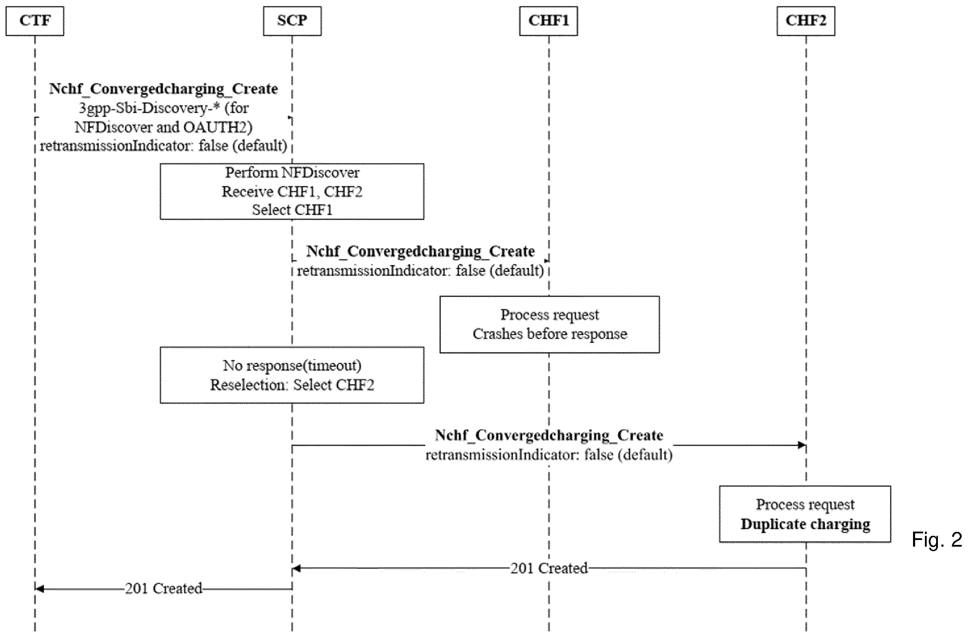

Fig. 2 shows a similar situation, with the difference that the SCP reselects an alternative CHF instead of a retry to CHF1. Since the charging was actually successful in CHF1 (only the successful response did not arrive at SCP), the charging request to CHF2 results in duplicate charging.

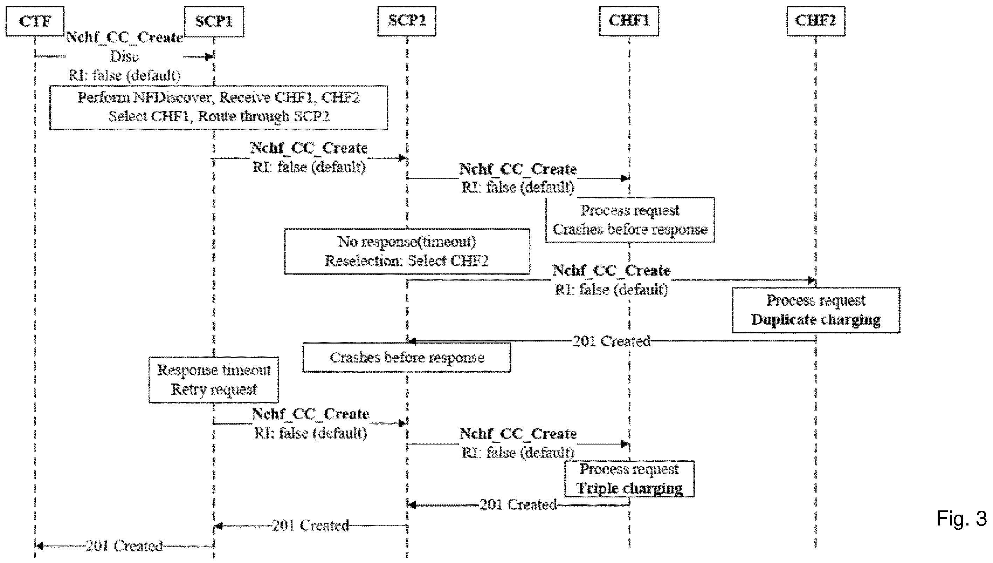

The problem may also occur in case of multiple SCPs, as illustrated in Fig. 3. In this example, the charging request is routed through 2 SCPs. SCP1 forwards the charging request to SCP2, which forwards it to CHF1. CHF1 processes the charging request successfully but crashes before it sends the acknowledgment (successful indication) back to SCP2. Since SCP2 does not receive an acknowledgment, it reselects CHF2 and forwards the request to CHF2. In the body of the request, it is not indicated that this is a retransmission because SCP2 must not modify the body of the request. CHF2 processes the charging request successfully (thus, resulting in double charging) and provides a successful indication (acknowledgment) back to SCP2. SCP2 crashes before it forwards the acknowledgment from CHF2 to SCP1. Hence, SCP1 assumes that SCP2 did not forward the charging request successfully. Accordingly, SCP1 retries to forward the request (still without indication that the charging request is a retransmission) to SCP2. This time, SCP2 forwards the request to CHF1, which successfully processes the request (resulting in triplicate charging). The acknowledgement (successful indication) is provided from CHF1 back to SCP1 via SCP2. In the end, in this example, one charging request results in triplicate charging.

Similar examples may apply to inter-PLMN communication. Here the cSEPP and vSEPP may be inserted in the path. The SEPP is not meant to perform NFProducer reselections, but it may perform HTTP2 retries.

The examples above use the case of charging. However, a corresponding problem may occur also in other use cases, when the retransmissions performed by the SCP in indirect communication cause undesirable effects.

Existing solutions to restrict SCP or SEPP retries are incomplete or difficult to manage. Different options available by conventional means are discussed now.
1) Configure the SCPs to disable retries/reselection for charging requests. This has the following disadvantages:
   a. Needs synchronization across many SCPs
   b. Needs synchronization across many SEPPs
   c. Needs coordination across PLMNs in case of inter-PLMN communication
   d. It contradicts the nature of indirect communication. SCP should be able to handle retries/reselection. This is why the common concepts of NF Sets and binding were created. It is not advantageous to disable these features for charging requests or other requests where retransmission is risky.
   e. If the retransmissionlndicator is set in the charging request, then the SCP can and should perform retransmissions. The ideal solution would be that the NFConsumer sets the retransmissionlndicator only after the first attempt has actually failed. Then the SCP can make retries/reselections.
2) The CTF (NFConsumer) always sets the retransmissionlndicator
   a. This will create a high processing load in the CHF (NFProducer), because the CHF would need to run the expensive routines to check for potential duplicate charging (e.g. check the request against all other entries of charging requests in the database) fore each and every charging request.
   b. For non-charging requests, a field similar to the retransmissionlndicator may not be available.
3) SCP manipulates the body of the request to add the retransmissionlndicator in case of retry or reselection
   a. Application login has to be added to the SCP, which is not desired. The HTTP2 requests should be transparent to the SCP. The entity that knows the application logic best is the NFConsumer.
   b. If potential non-charging requests with risky duplication are considered, SCP would need to become very intelligent to handle all cases.
4) For subsequent requests on a previously created resource, there is the possibility that the NFConsumer includes only the 3gpp-Sbi-Target-ApiRoot header, with no 3gpp-Sbi-Routing-Binding nor 3gpp-Sbi-Discovery-* headers. In this case the SCP may not be able to make reselection. However
   a. This is not quaranteed, e.g. an SCP implementation may attempt to discover the NFProfile of the producer using the FQDN of the target-ApiRoot as NFDiscovery query parameter.
   b. Even if no NFProducer reselection is possible, HTTP2 retries may still be performed
   c. In case of OAUTH2 and model D, it is possible that the NFConsumer has to include the 3gpp-Sbi-Discovery-* headers for OAUTH2 purposes, if the NFConsumer does not have a cached token. Then the SCP will use them to make reselections.
   d. This method does not work for initial requests, e.g. requests that create a resource.

3GPP TS 29.500, clause 5.2.3.3.10, defines the 3gpp-Sbi-Selection-Info header. The 3gpp-Sbi-Selection-Info is related, but does not provide any utility to solve the problem examined here. The 3gpp-Sbi-Selection-Info header allows the NFConsumer to force the SCP to make a reselection, i.e. to force the SCP to not forward the HTTP2 request to the 3gpp-Sbi-Target-ApiRoot but to immediately make a reselection. However, to solve the problem described here, a capability is useful for the NFConsumer to instruct the SCP to not make reselections. Also, the 3gpp-Sbi-Selection-Info header does not provide the ability to instruct the SCP to not make simple HTTP2 retries to the same or other IP endpoint of the same NFProducer.

3GPP TS 29.500, clause 6.10.3.5, mentions that the "The SCP remains agnostic of applicative requirements on failure handling and retry handling. Accordingly, failure handling and retry handling is controlled by CHF's consumers.". However currently there is no way for the NFConsumer to indicate that the SCP shall not make any retries or reselections.

Some example embodiments of the invention provide at least one of the following capabilities to the NF consumer and the SCP:
1) The capability that the NFConsumer can instruct the SCP/SEPP to not make any retries and/or reselections, not even simple HTTP2 retries to alternative IP endpoints of the same NFProducer
2) The capability that the NFConsumer can instruct the SCP to make retries/reselections, but to restrict the scope of the retries/reselections to an NFService/NFService Set/NFInstance/NF Set.

The capabilities may be considered as handling instructions for the SCP in case the forwarding of the request is not successful or if the SCP does not receive an indication that the forwarding of the request was successful. For example, respective instructions may be included in 3gpp-Sbi-Selection-Info.

In some example embodiments of the invention, the SCP returns, to the NFConsumer, an identifier (e.g. NFInstanceld) of the NFProducer it selected in case of a failure, if the NFConsumer has instructed the SCP to not make any retries or reselections.

According to some example embodiments of the invention, the 3gpp-Sbi-Selection-Info header, which is defined in 3GPP TS 29.500, clause 5.2.3.3.10, is extended. The *reselection* field of the header is extended with at least one of the values "no-retries" and "restricted-selection". Accordingly, 3GPP TS 29.500, clause 5.2.3.3.10, may be modified as follows, for example (*italics* indicates additions, highlight deletions):

### " 5.2.3.3.10 3gpp-Sbi-Selection-Info

The header contains a comma-delimited list of additional (re)selection information for an HTTP request message. It may be included by a NF service consumer or a NF service producer in a HTTP request message for indirect communication, *or in interPlmn communication. The header includes instructions from the NFConsumer to the SCP or SEPP regarding retry attempts towards the same or alternative IP endpoints of the same target NF, or target NF reselections.* If the header is received by the *SCP*/*SEPP* and the *SCP*/*SEPP* supports the header, the *SCP*/*SEPP* shall *act as follows:*
- *If "reselection" is "true", the SCP shall avoid forwarding the request message to the target NF as indicated in the 3GPP-Sbi-Target-apiRoot (if present in the request) or the request URI (otherwise), i.e., the SCP shall perform a reselection. The SCP shall use the selection-criteria included in this header together with 3GPP-Sbi-Routing-Binding or 3GPP-Sbi-Discovery-* headers whichever available, when the SCP performs the (re)selection of the target NF.*
- *If "retries" is "no-retries" the SCP*/*SEPP shall only attempt to forward the HTTP2 request once, and shall make no retries to the same or alternative endpoints of the same NFProducer, nor perform any NFProducer reselection. SCP*/*SEPP shall forward the header to the next entinty, if the next entity is an SCP or SEPP.*
- *If "selection-scope" is "restricted-selection ", the SCP shall perform retries and target NF reselection, but shall limit the scope of the reselection to the value of the accompanying parameter "selection-scope-criteria".*
*The SCP*/*SEPP shall proxy the header to the next entity, if the next entity is also a proxy. Otherwise the header shall be removed.*

The encoding of the header follows the ABNF as defined in IETF RFC 7230 [12].

3GPP-Sbi-Selection-Info = "3GPP-Sbi-Selection-Info" ":" 1#([OWS "reselection=" reselectionvalue] [1*(";" OWS selection-criteria)] / *"retries=" retriesindication* / *("selection-scope = " selection-scope-value* ";" *selection-scope-criteria))*
reselectionvalue = "true" / "false"
selection-criteria = selection-criteria "=" token
selection-criteria = "not-select-nfservinst" / "not-select-nfserviceset" / "not-select-nfinst" / "not-select-nfset"
*retriesindication = "retries-allowed"* / *"no-retries"*
*selection-scope-value = "restricted-selection"*
*selection-scope-criteria = selection-scope-criteria-indication* "=" *token*
*selection-scope-criteria-indication = "nfinst"* / *"nfset"* / *"nfservinst"* / *"nfserviceset"*
- reselection: When it is set to "true", it indicates that the SCP shall perform a reselection, i.e., the SCP shall not forward the request message towards the target as indicated in the target uri or in the 3GPP-Sbi-Target-ApiRoot. When this parameter occurs multiple times in the comma-delimited list, all parameters shall have the same value."
- not-select-nfservinst (the NF service instance(s) that shall not be selected): indicates an NF Service Instance ID. This parameter shall be present if the sender of the request message knows that the target NF or other potential target NF service instance that shall not be selected, e.g., when the target NF service instance is overloaded, or some NF service instances are out of service. (see also clause 6.4.3.4.5.2.1) When this parameter is present, one of not-select-nfserviceset or not-select-nfinst shall be present to enable the SCP to identify the nfservinst.
- not-select-nfserviceset (the NF service instance pertaining to a NF service set in a NF instance that shall not be selected): indicates ndicates an NF Service Set ID as defined in clause 28.13 in 3GPP TS 23.003 [15]. This parameter shall be present if the sender of the request message knows that all NF service instances in the NF service set shall not be selected, e.g., when target NF service instance has indicated its overload and the overload scope is NF service set level, in this case, not-select-nfservinst shall not be present. (see also clause 6.4.3.4.5.2.1)
- not-select-nfinst (the NF instance(s) that shall not be selected): indicates ndicates an NF Instance ID, as defined in clause 5.2.2.2.2 in 3GPP TS 29.510 [8]. This parameter shall be present if the sender of the request message knows the target NF instance or other potential target NF instance that shall not be selected, e.g., when the target NF instance is overloaded, or other NF instance(s) is out of service, in this case, not-select-nfservinst shall not be present. (see also clause 6.4.3.4.5.2.1)
- not-select-nfset (the NF set that shall not be selected): indicates ndicates an NF Set ID, as defined in clause 28.12 in 3GPP TS 23.003 [15]. This parameter may be present, e.g., during an initial resource creation with Delegated Discovery (Indirect Communication Mode D), the NF service consumer knows certain NF set shall not be selected.
- *retriesindication: The default value is "retries-allowed", which means the SCP*/*SEPP can retry the SBI request. When the parameter is set to "no-retries", the SCP*/*SEPP shall only attempt to the forward the SBI request once, and shall make no retries to the same or alternative endpoints of the same target NF, nor perform any target NF reselection.*
- *selection-scope: When present with value "restricted-selection ", it instructs the SCP to restrict the scope of the target NF (re)selection. The SCP shall select the target NFfrom within the scope signalled in the selection-scope-criteria*
- *nfinst: The SCP shall limit the (re)selection scope only within one NFInstance. If the token has the value "initial-selection ", then the reselection shall be within the NFInstance the SCP originally selected. Otherwise the token shall indicate an NFInstanceId and the SCP shall limit retries within that NFInstance.*
- *nfset: The SCP shall limit the (re)selection scope only within one NF Set. If the token has the value "initial-selection ", then the reselection shall be within the NF Set to which the NFInstance the SCP originally selected belongs. Otherwise the token shall indicate an NF Set Id and the SCP shall limit retries within that NF Set.*
- *nftervinst: The SCP shall limit the (re)selection scope only within one NFService instance. If the token has the value "initial-selection ", then the reselection shall be within the NFService instance which the SCP originally selected selected. If the request contained the 3GPP-Sbi-Target-ApiRoot header the token has the value "initial-selection ", then the retries shall be limited to the endpoints to which the authority in the 3GPP-Sbi-Target-ApiRoot resolves. Otherwise the token shall indicate an NFService instance Id and the SCP shall limit retries within that NFService instance. In the latter case one of nfinst or nfserviceset shall be present to enable the SCP to identify the nfservinst.*
- *nfserviceset: The SCP shall limit the (re)selection scope only within one NF Service Set. If the token has the value "initial-selection ", then the reselection shall be within the NF Service Set to which the NFService the SCP originally selected belongs. Otherwise the token shall indicate an NF Service Set ID and the SCP shall limit retries within that NF Service Set*

| | |
|---|---|
| EXAMPLE 1: | The SCP may or may not perform reselection, but when doing reselection, it shall not select NF instance as identified by 87654321-4191-46b3-955c-ac631f953ed8. |
| | 3GPP-Sbi-Selection-Info: not-select-nfinst=87654321-4191-46b3-955c-ac631f953ed8 |
| EXAMPLE 2: | The SCP may or may not perform reselection, but when doing reselection, it shall not select NF service set in the NF instance (as identified in nfi87654321-4191-46b3-955c-ac631f953ed8). |
| | 3GPP-Sbi-Selection-Info: not-select-nfserviceset=setxyz.snnsmf-pdusession.nfi87654321-4191-46b3-955c-ac6311953ed8.5gc.mnc012.mcc345; |
| EXAMPLE 3: | The SCP shall perform reselection; and when doing reselection, it shall not select NF instance as identified by 87654321-4191-46b3-955c-ac631f953ed8. |
| | 3GPP-Sbi-Selection-Info: reselection=true; not-select-nfinst=87654321-4191-46b3-955c-ac631f953ed8 |
| EXAMPLE 4: | The SCP shall perform reselection; and when doing reselection, the SCP shall not select NF service instance xyz1 and xyz2 in the NF instance identified by 87654321-4191-46b3-955c-ac631f953ed8, and NF service instance abc1 and abc2 in the NF instance identified by 12345678-4191-46b3-955c-ac631f953ed8. |
| | 3GPP-Sbi-Selection-Info: reselection=true; not-select-nfservinst=xyz1; not-select-nfservinst=xyz2; not-select-nIinst=87654321-4191-46b3-955c-ac6311953ed8, reselection=true; not-select-nfservinst=abc1; not-select-nfservinst=abc2; not-select-nfinst=12345678-4191-46b3-955c-ac631f953ed8 |
| *EXAMPLE 5:* | *NFConsumer instructs the SCP*/*SEPP to not make any retries:* |
| | *3GPP-Sbi-Selection-Info*: *retries=no-retries* |
| *EXAMPLE 6:* | *NFConsumer instructs the SCP*/*SEPP to not make any retries, and, in case of SCP, to make reselection, excluding NFINstance 87654321-4191-46b3-955c-ac631f953ed8* |
| | *3GPP-Sbi-Selection-Info*: *retries=no-retries, reselection=true; nfinst=87654321-4191-46b3-955c-ac631f953ed8* |
| *EXAMPLE 7:* | *NFConsumer instructs the SCP to make retries*/*reselections only within the scope of the NFInstance that the SCP initially selected:* |
| | *3GPP-Sbi-Selection-Info: selection-scope=restricted-selection; nfinst=initial-selection* |
| *EXAMPLE 8:* | *NFConsumer instructs the SCP to make retries*/*reselections only within the scope of the NFInstance that NFConsumer indicates:* |
| | *3GPP-Sbi-Selection-Info: selection-scope= restricted-selection; nfinst=87654321-4191-46b3-955c-ac631f953ed8* |
| *EXAMPLE 9:* | *NFConsumer instructs the SCP to make retries*/*reselections only within the scope of the NF Set to which the NFInstance that the SCP initially selected belongs:* |
| | *3GPP-Sbi-Selection-Info: selection-scope=restricted-selection; nfset=initial-selection* |
| *EXAMPLE 10:* | *NFConsumer instructs the SCP to make retries*/*reselections only within the scope of the NF Set that the NFConsumer indicates:* |
| | *3GPP-Sbi-Selection-Info: selection-scope=restricted-selection; nfset=set1.chfset.5gc.mnc012.mcc345* |
| *EXAMPLE 11:* | *NFConsumer instructs the SCP to make retries*/*reselections only within the scope of the NF Set that the NFConsumer indicates, and exclude NFInstance 87654321-4191-46b3-955c-ac631f953ed8:* |
| | *3GPP-Sbi-Selection-Info: selection-scope=restricted-selection; nfset= sel1.chftet.5gc.mnc012.mcc345; not-select-nfinst=87654321-4191-46b3-955c-ac631f953ed8* |

Additionally, according to some example embodiments of the invention, 3GPP TS 29.500, clause 6.10.3.4, may be modified as, for example (*italics* indicates additions, highlight deletions):

### " 6.10.3.4 Returning the Producer's NF Instance ID and NF Group ID to the NF Service Consumer

The following requirements shall apply when using indirect communication with delegated discovery, or indirect communication without delegated discovery when the NF service consumer only selects an NF set and delegates the selection of the NF service instance to the SCP (see clause 6.10.5.1):
- an SCP that (re)selected the target NF service instance shall include the 3GPP-Sbi-Producer-Id header and, for indirect communication with delegated discovery, if the target NF service instance pertains to an NF Group, the 3GPP-Sbi-Target-Nf-Group-Id header, in the 2xx HTTP response it forwards towards the NF Service Consumer.
The 3GPP-Sbi-Producer-Id header shall contain the NF Instance ID and it should contain the NF Service Instance ID and, if the NF service instance pertains to an NF set and/or an NF service set, the NF set ID and/or NF service set IDof the NF Service Producer selected by the SCP.
The 3GPP-Sbi-Target-Nf-Group-Id shall contain the NF Group ID of the NF Service Producer selected by the SCP (see clause 6.10.3.2); if the SCP received a 4xx/5xx HTTP response including a 3GPP-Sbi-Response-Info header with "context-transferred" parameter set to value "true" from the reselected target NF service instance, which indicates the corresponding resource or context has been transferred to the reselected target NF service instance, the SCP shall also insert a 3GPP-Sbi-Producer-Id header and conditionally a 3GPP-Sbi-Target-Nf-Group-Id header in the HTTP response it forwards to the NF Service Consumer.
*If the SCP receives a service request including the 3GPP-Sbi-Selection-Info header with the retries parameter set to "no-retries", and no successful response is received by the SCP after forwarding the request once, the SCP should include the 3GPP-Sbi-Producer-Id header, indicating the NF (service) instance ID that the SCP selected, in a 4xx*/*5xx HTTP response it sends towards the NF Service Consumer.*

- If the 3GPP-Sbi-Producer-Id header or the 3GPP-Sbi-Target-Nf-Group-Id header is already present in an HTTP response (e.g. in scenarios with multiple SCPs between the NF service consumer and NF service producer), the SCP shall forward the respective header unmodified in the response towards the HTTP client (without adding any new such respective header).

| | |
|---|---|
| NOTE 1: | This allows to support deployments where not all NF Service Producers or NF Service Consumers have been upgraded to support the binding procedures. |
| NOTE 2: | In scenarios where the same NF Service Producer needs to be selected when creating new resources, e.g. when the AMF needs to establish a new PDU session towards the same SMF as the one selected for a previous PDU session, the NF Service Consumer can include the 3GPP-Sbi-Discovery-target-nf-instance-id header set to the NF Instance ID of the NF Service Producer in the request creating the new resource. |
| NOTE 3: | An SCP needs not insert a 3GPP-Sbi-Producer-Id header nor a 3GPP-Sbi-Target-Nf-Group-Id header in an HTTP response if it received a 3 GPP-Sbi-Target-apiRoot header in the related HTTP request and it did not reselect a different NF Service Producer. |
| NOTE 4: | Inserting the NF Service Instance ID, NF Set ID and/or NF Service Set ID in the 3GPP-Sbi-Producer-Id header enables NF service consumers to perform overload control towards a specific NF producer service instance, NF set or NF service set when the NF service producer advertises overload control with a scope set to a specific NF service instance, NF set or NF service set (see clause 6.4.3). It also enables NF service consumers to reselect another NF service instance in the same NF instance, NF set or NF service set when so required (see e.g. clause 6.12.1 and clause 6.5.3 of 3GPP TS 23.527 [38]). |

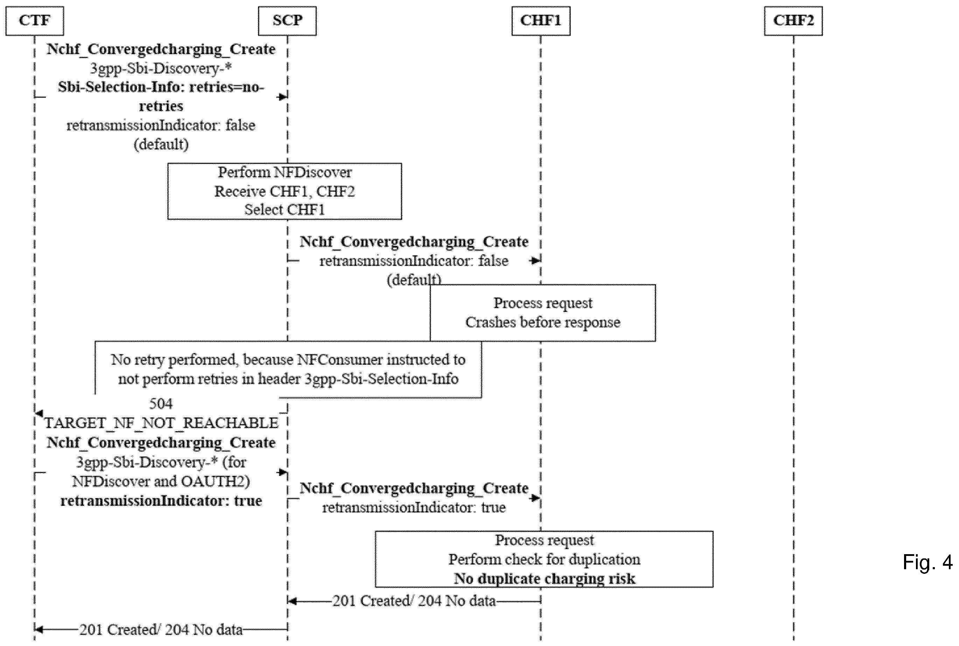

Hereinafter, with reference to Figs. 4 to 7, a few example use cases are illustrated, where some example embodiments of the invention avoid duplicate charging. In Figs. 4 to 7, the following abbreviations may be used:

| | |
|---|---|
| • Nchf_CC_Create | : Nchf_Convergedcharging_Create |
| • RI | : retransmissionIndicator |
| • Disc | : 3gpp-Sbi-Discovery-* headers, for NFDiscovery and OAUTH2 |
| • SI | : 3gpp-Sbi-Selection-Info |

Fig. 4 illustrates how duplicate charging can be avoided if the NFConsumer (CTF) instructs the SCP to not make any retries or reselections for the first attempt of the charging request, where the retransmissionlndicator is false. The CTF uses the header *"3GPP-Sbi-Selection-Info: retries=no-retries"* to prevent the SCP from making retries or reselections. If the SCP does not receive a success indication (indicating that the charging request was successfully executed) from the selected CHF (CHF1), the SCP does not make any retries, and returns a failure to the CTF (504). Then the CTF retransmits the charging request, but now it sets the *retransmissionIndicator* to true and removes *"no-retries"* from the *3GPP-Sbi-Selection-Info* header or even the entire *3GPP-Sbi-Selection-Info* header, thus allowing the SCP to make retries and target NF reselection. The CHF (NFProducer) that receives the request, sees that the *retransmissionIndicator* is set, and performs the potentially computationally expensive procedure to check if there is duplicate charging. Thus, it is achieved that the potentially computationally expensive procedure to check for duplication is only executed when the request has been actually retransmitted, while the SCP is agnostic of any details (such as the *retransmissionIndicator)* contained in the body of the charging request.

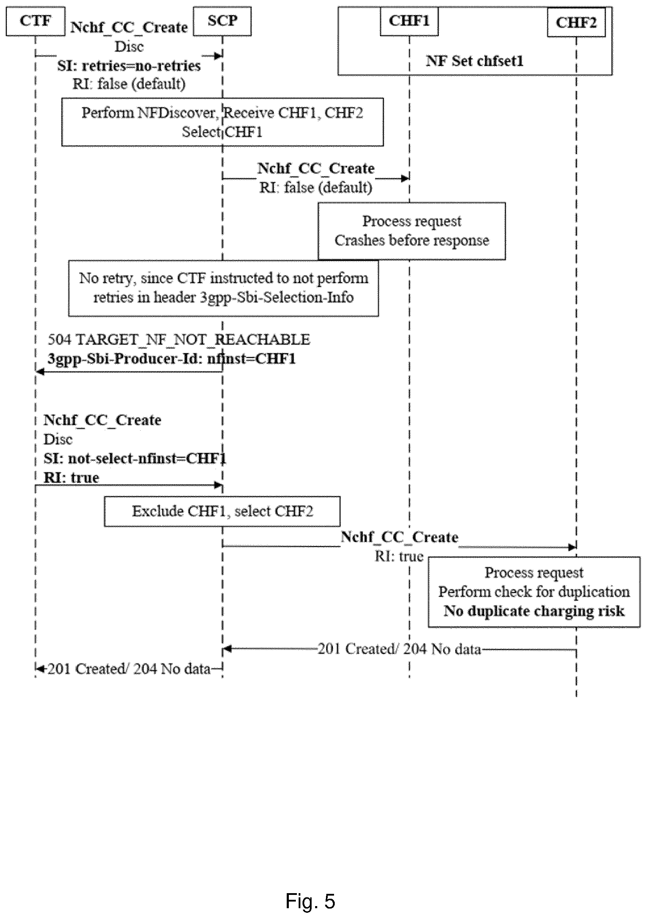

Fig. 5 illustrates an example, where the header *"3GPP-Sbi-Selection-Info: retries=no-retries"* according to some example embodiments of the invention is combined with the additional modification that the SCP returns the 3GPP-Sbi-Producer-Id header in the case where the NFConsumer has instructed SCP not to perform any retries or reselections. Accordingly, the error indication 504 TARGET_NF_NOT_REACHABLE from SCP to CTF comprises an identifier (e.g. an address) of the service producer selected by SCP, here: CHF1 (3gpp-Sbi-Producer-Id: *nfinst=54804518-4191-46b3-955c-ac631f953ed8).* Then the NFConsumer, in the retransmission, can include the header *"3gpp-Sbi-Selection-Info: not-select-nfinst=54804518-4191-46b3-955c-ac631f953ed8",* to instruct the SCP to not attempt to send the request to the NFProducer that has already failed.

The example shown here is for an initial request. If the request was a subsequent request, containing a *3gpp-Sbi-Target-ApiRoot* header, then the *3gpp-Sbi-Selection-Info* header in the retransmission may also contain the *"reselection=true"* parameter.

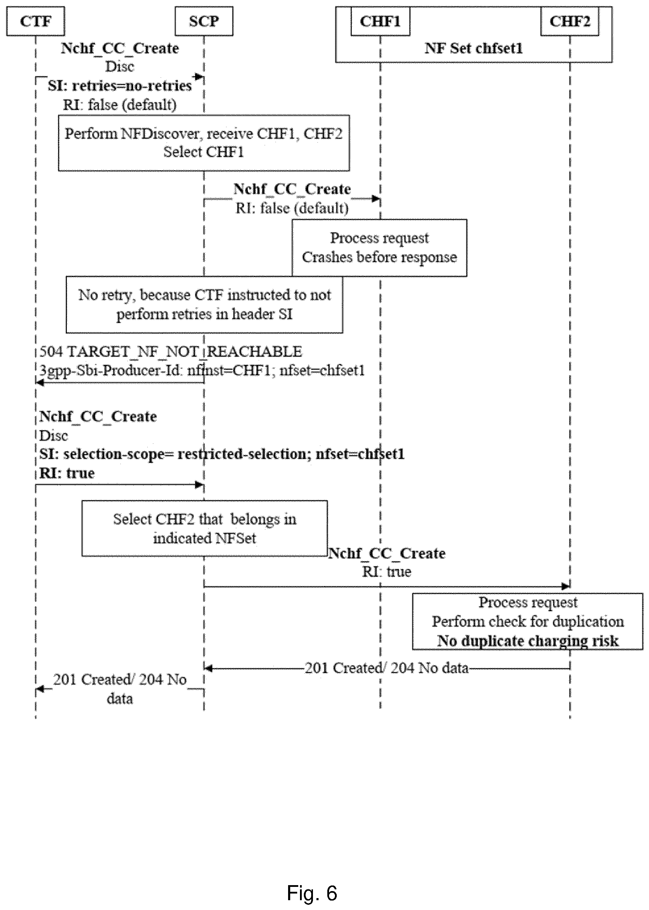

Fig. 6 shows a use case where the retransmitted request allows reselection, but only within the NF Set of the originally selected CHF. This case may be useful in cases where the CHFs of the same NF Set can safely detect duplications if the retransmissionlndicator in the body of the charging request is true, but other CHFs may not be able to detect duplications. In the flow of Fig. 6, the 3gpp-Sbi-Producer-Id header (defined in 3GPP TS 29.500, clause 5.2.3.2.8) is used by the SCP to signal the selected NF Set of the initially selected producer. In the retransmission, the CTF uses the header *"3gpp-Sbi-Selection-Info"* with the parameter *"selection-scope=restricted-selection; nfset=set1.chfset.5gc.mnc012.mcc345"* according to some example embodiments of the invention to signal to the SCP what is the scope of the allowed target NF selection.

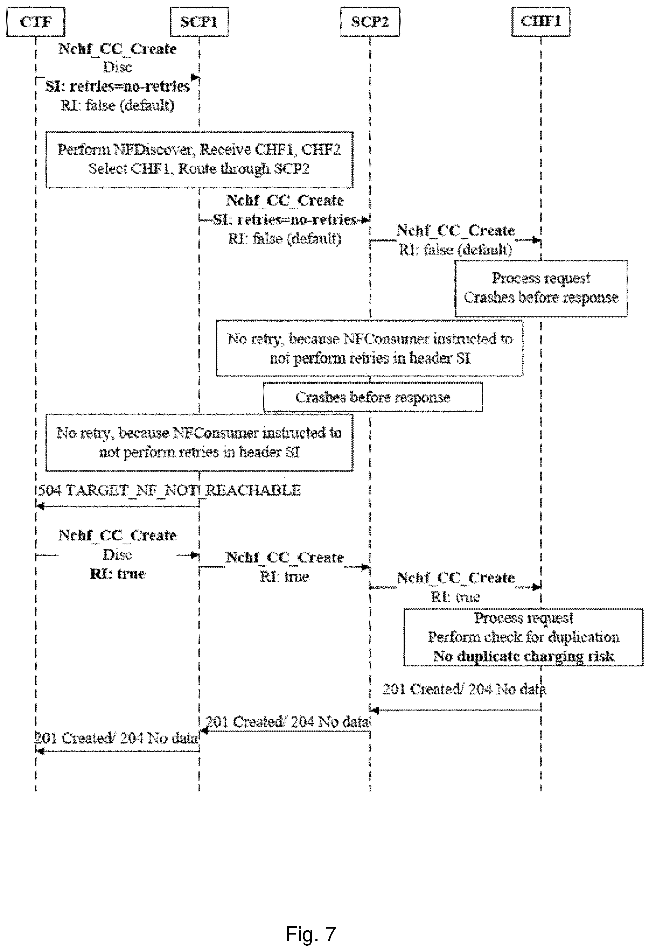

Fig. 7 illustrates the case of multiple SCP hops. Here the proposed *3gpp-Sbi-Selection-Info* header is transmitted from the first SCP (SCP1) to the second SCP (SCP2). The second SCP knows that no retries are allowed and does not make any retries. The first SCP also knows this. Only when the CTF sets the *retransmissionIndicator* in the body of the charging request to true for the retransmission of the charging request, the SCPs may perform retries/reselections, if needed.

Fig. 7 can also apply to an inter-PLMN communication case, if the SCP2 is replaced by a SEPP. Even though SEPP does not perform target NF reselection, it can perform request retries, e.g. in case of timeout. With the use of *"3gpp-Sbi-Selection-Info: reselection=no-retries"* the SEPP knows that it must not perform any retries.

The use cases above illustrate some example use cases for charging. However, some example embodiments may be useful for any case where the NF consumer (requester NF) would like to restrict or prevent retries and optionally also reselections, e.g. if it knows that retries might be risky.

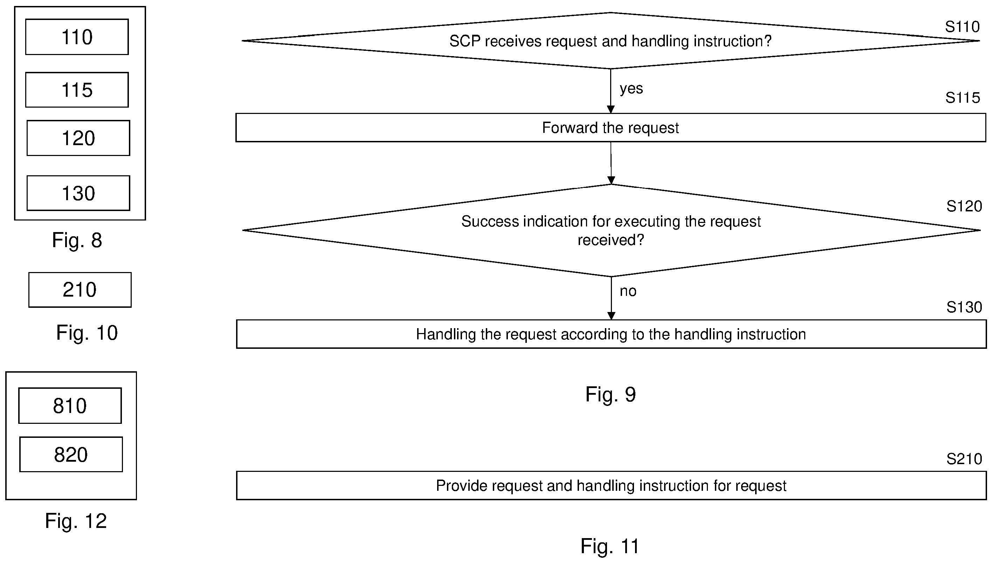

Fig. 8 shows an apparatus according to an example embodiment of the invention. The apparatus may be proxy (e.g. SCP or SEPP) or an element thereof. Fig. 9 shows a method according to an example embodiment of the invention. The apparatus according to Fig. 8 may perform the method of Fig. 9 but is not limited to this method. The method of Fig. 9 may be performed by the apparatus of Fig. 8 but is not limited to being performed by this apparatus.

The apparatus comprises means for monitoring 110, means for forwarding 115, means for checking 120, and means for handling 130. The means for monitoring 110, means for forwarding 115, means for checking 120, and means for handling 130 may be a monitoring means, forwarding means, checking means, and handling means, respectively. The means for monitoring 110, means for forwarding 115, means for checking 120, and means for handling 130 may be a monitor, forwarder, checker, and handler, respectively. The means for monitoring 110, means for forwarding 115, means for checking 120, and means for handling 130 may be a monitoring processor, forwarding processor, checking processor, and handling processor, respectively.

The means for monitoring 110 monitors whether a proxy receives, from a requester, a request and a handling instruction for the request (S110). E.g., the requester may be a service consumer or another proxy or a client.

If the proxy receives the request (first condition of S110 = yes), the means for forwarding 115 forwards the request from the proxy to a first target (S115). The first target may be e.g. a service producer or a further proxy or a server. The means for checking 120 checks whether the proxy receives a success indication in response to the forwarding the request to the first target (S120). The success indication indicates that the request was successfully executed.

If the proxy receives the handling instruction (second condition of S110 = yes) and the proxy does not receive the success indication (S120 = no): the means for handling 130 handles the request according to the handling instruction (S130). The handling instruction instructs whether or not the proxy is admitted to retry to forward the request to the first target.

The handling instruction may additionally instruct
- whether or not the proxy is admitted to reselect a second target for forwarding the request to the second target; or,
- a scope from which the proxy is admitted to reselect the second target for forwarding the request to the second target.

The two conditions of S110 may be monitored fully or partly in parallel or in an arbitrary sequence if they are monitored prior to the forwarding the request (S115). However, in some example embodiments, the second condition of S110 (handling instruction received) may be monitored only in parallel with or after the forwarding the request (S115) or even only if the proxy does not receive the success indication (S120 = no).

Fig. 10 shows an apparatus according to an example embodiment of the invention. The apparatus may be service consumer (NF requester) or an element thereof. Fig. 11 shows a method according to an example embodiment of the invention. The apparatus according to Fig. 10 may perform the method of Fig. 11 but is not limited to this method. The method of Fig. 11 may be performed by the apparatus of Fig. 10 but is not limited to being performed by this apparatus.

The apparatus comprises means for providing 210. The means for providing 210 may be a providing means. The means for providing 210 may be a provider. The means for providing 210 may be a providing processor.

The means for providing 210 provides, by a requester, a request and a handling instruction for the request to a proxy (S210). The requester may be e.g. a service consumer or another proxy or a client. The proxy has to forward the request. The handling instruction instructs whether or not the proxy is admitted to retry to forward the request to a first target if the proxy does not receive a success indication. The success indication indicates that the request was successfully executed. The first target may be e.g. a service producer or a further proxy or a server.

The handling instruction may additionally instruct
- whether or not the proxy is admitted to reselect a second target for forwarding the request to the second target if the proxy does not receive the success indication; or,
- a scope from which the proxy is admitted to reselect the second target for forwarding the request to the second target if the proxy does not receive the success indication.

Fig. 12 shows an apparatus according to an example embodiment of the invention. The apparatus comprises at least one processor 810, at least one memory 820 storing instructions that, when executed by the at least one processor 810, cause the apparatus at least to perform the method according to at least one of the following figures and related description: Fig. 9 or Fig. 11.

Some example embodiments are explained where the 3gpp-Sbi-Selection-Info header is used to convey the information whether or not retries and reselections are admitted, and potentially also the scope such reselections. As other options to convey such information, for example one of the following may be used:
- A new dedicated header to restrict SCP retries/reselections, instead of expanding the existing 3gpp-Sbi-Selection-Info header.
- A dedicated header to restrict the (re)selection scope of the SCP.
- The NFproducer may send a separate instruction to the SCP, preferably prior to sending the request to the SCP. For example, the instruction may forbid retries and/or reselections for all requests from the NFproducer to the SCP unless they are allowed in one of the headers explained hereinabove.

The options may be combined. For example, an expanded the 3gpp-Sbi-Selection-Info header may be used to convey the information whether or not retries and reselections are admitted, and a dedicated header may restrict the reselection scope of the SCP.

Some example embodiments are explained for a service based architecture (e.g. of 5G) with HTTP2 as the protocol for the requests. However, the invention is not limited to HTTP2. Other protocols such as HTTP, HTTP3, or gRPC may be feasible, too.

Some example embodiments of the invention are explained for the service based architecture where the requester is a service consumer or a (first) proxy and the first target is a service producer or a (further) proxy. However, the invention is not limited to the service based architecture. For example, the invention may be applied to a client - server architecture, where the requester is a client and the first target is a server or a further proxy.

Some example embodiments are explained with respect to a 5G network. However, the invention is not limited to 5G. It may be used in other communication networks, too, e.g. in previous of forthcoming generations of 3GPP networks such as 4G, 6G, or 7G, etc. It may be used in non-3GPP communication networks, such as other wireless or wireline communication networks providing indirect communication by a function corresponding to the service communication proxy.

One piece of information may be transmitted in one or plural messages from one entity to another entity. Each of these messages may comprise further (different) pieces of information.

Names of network elements, network functions, protocols, and methods are based on current standards. In other versions or other technologies, the names of these network elements and/or network functions and/or protocols and/or methods may be different, as long as they provide a corresponding functionality. The same applies correspondingly to the terminal.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be deployed in the cloud.

According to the above description, it should thus be apparent that example embodiments of the present invention provide, for example, a proxy (such as a SCP or a SEPP) or a component thereof, an apparatus embodying the same, a method for controlling and/or operating the same, and computer program(s) controlling and/or operating the same as well as mediums carrying such computer program(s) and forming computer program product(s). According to the above description, it should thus be apparent that example embodiments of the present invention provide, for example, a service consumer (such as a NFc etc.) or a component thereof, an apparatus embodying the same, a method for controlling and/or operating the same, and computer program(s) controlling and/or operating the same as well as mediums carrying such computer program(s) and forming computer program product(s).

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Each of the entities described in the present description may be embodied in the cloud.

It is to be understood that what is described above is what is presently considered the preferred example embodiments of the present invention. However, it should be noted that the description of the preferred example embodiments is given by way of example only and that various modifications may be made without departing from the scope of the invention as defined by the appended claims.

The terms "first X" and "second X" include the options that "first X" is the same as "second X" and that "first X" is different from "second X", unless otherwise specified. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

## Claims

1. Apparatus comprising a proxy configured to:
monitor (S110) whether the proxy receives a request and a handling instruction for the request from a requester;
forward (S115) the request from the proxy to a first target if the proxy receives the request;
check (S120) whether the proxy receives, in response to the forwarding the request to the first target, a success indication from the first target indicating that the request was successfully executed;
handle (S130) the request according to the handling instruction if the proxy receives the handling instruction and the proxy does not receive the success indication; wherein the handling instruction instructs whether or not the proxy is admitted to retry to forward the request to the first target.

2. The apparatus according to claim 1, wherein the proxy is further configured to inform the requester on an identifier of the first target if the proxy does not receive the success indication.

3. The apparatus according to any of claims 1 and 2, wherein the success indication comprises an acknowledgment from the first target in response to the forwarding the request to the first target.

4. The apparatus according to any of claims 1 to 3, wherein the proxy comprises a service communication proxy or a service edge protection proxy.

5. The apparatus according to any of claims 1 to 4, wherein at least one of the following:
• the requester comprises a service consumer or another proxy or a client; or
• the first target comprises a service producer or a further proxy or a server.

6. Apparatus comprising a requester configured to:
provide (S210) a first request and a first handling instruction for the first request to a proxy for forwarding the first request to a first target, wherein the first handling instruction instructs whether or not the proxy is admitted to retry to forward the first request to a first target if the proxy does not receive a first success indication from the first target indicating that the first request was successfully executed.

7. The apparatus according to claim 6, wherein the requester is further configured to monitor
whether the requester receives an indication from the proxy that the proxy did not receive the first success indication;
form a second request based on the first request if the requester receives the indication from the proxy that the proxy did not receive the first success indication;
provide the second request and a second handling instruction to the proxy; wherein
the second handling instruction is different from the first handling instruction, and
the second handling instruction instructs whether or not the proxy is admitted to retry to forward the second request to a third target if the proxy does not receive a second success indication indicating that the second request was successfully executed.

8. The apparatus according to claim 7, wherein at least one of the following:
the third target is the same as the first target; or
the second request is different from the first request.

9. The apparatus according to any of claims 7 and 8, wherein the requester is further configured to monitor whether the received indication from the proxy that the proxy did receive the first success indication comprises an identifier of the first target.

10. The apparatus according to any of claims 6 to 9, wherein the requester comprises a charging trigger function, the first request is a first charging request, and the first request comprises an indication whether or not the first request is a retransmission of another charging request.

11. The apparatus according to claim 10 dependent on any of claims 7 to 9, wherein
the first charging request comprises the indication that the first charging request is not a retransmission of another charging request; and
the forming the second request based on the first request comprises forming the second request as a second charging request comprising the indication that the second request is a retransmission of another charging request.

12. The apparatus according to claim 11, wherein
the first charging request comprises charging instructions; and
the second charging request comprises the charging instructions.

13. The apparatus according to any of claims 6 to 12, wherein at least one of the following:
• the requester comprises a service consumer or another proxy or a client; or
• the first target comprises a service producer or a further proxy or a server.

14. Method performed by a proxy comprising:
monitoring (S110) whether the proxy receives a request and a handling instruction for the request from a requester;
forwarding (S115) the request from the proxy to a first target if the proxy receives the request;
checking (S120) whether the proxy receives, in response to the forwarding the request to the first target, a success indication from the first target indicating that the request was successfully executed;
if the proxy receives the handling instruction and the proxy does not receive the success indication: handling (S130) the request according to the handling instruction; wherein
the handling instruction instructs whether or not the proxy is admitted to retry to forward
the request to the first target.

15. Method performed by a requester comprising:
providing (S210), by a requester, a first request and a first handling instruction for the first request to a proxy for forwarding the first request to a first target, wherein
the first handling instruction instructs whether or not the proxy is admitted to retry to forward the first request to the first target if the proxy does not receive a first success indication from the first target indicating that the first request was successfully executed

16. A computer program product comprising a set of instructions which, when executed on an apparatus, is configured to cause the apparatus to carry out the method according to any of claims 14 and 15.

## Patentansprüche

1. Vorrichtung, die einen Proxy umfasst, der zu Folgendem ausgelegt ist:
Überwachen (S110), ob der Proxy eine Anforderung und eine Handhabungsanweisung für die Anforderung von einem Anforderer empfängt;
Weiterleiten (S115) der Anforderung vom Proxy zu einem ersten Ziel, wenn der Proxy die Anforderung empfängt;
Prüfen (S120), ob der Proxy in Reaktion auf das Weiterleiten der Anforderung zum ersten Ziel eine Erfolgsanzeige vom ersten Ziel empfängt, die anzeigt, dass die Anforderung erfolgreich ausgeführt wurde;
Handhaben (S130) der Anforderung gemäß der Handhabungsanweisung, wenn der Proxy die Handhabungsanweisung empfängt und der Proxy die Erfolgsanzeige nicht empfängt; wobei
die Handhabungsanweisung anweist, ob es dem Proxy erlaubt ist, das Weiterleiten der Anforderung zum ersten Ziel erneut zu versuchen oder nicht.

2. Vorrichtung nach Anspruch 1, wobei der Proxy ferner dazu ausgelegt ist, den Anforderer über eine Kennung des ersten Ziels zu informieren, wenn der Proxy die Erfolgsanzeige nicht empfängt.

3. Vorrichtung nach einem der Ansprüche 1 und 2, wobei die Erfolgsanzeige in Reaktion auf das Weiterleiten der Anforderung zum ersten Ziel eine Bestätigung vom ersten Ziel umfasst.

4. Vorrichtung nach einem der Ansprüche 1 bis 3, wobei der Proxy einen Dienstkommunikationsproxy oder einen Dienstedgeschutzproxy umfasst.

5. Vorrichtung nach einem der Ansprüche 1 bis 4, wobei mindestens eines von Folgendem gilt:
• der Anforderer umfasst einen Dienstverbraucher oder einen anderen Proxy oder einen Client; oder
• das erste Ziel umfasst einen Dienstproduzenten oder einen weiteren Proxy oder einen Server.

6. Vorrichtung, die einen Anforderer umfasst, der zu Folgendem ausgelegt ist:
Bereitstellen (S210) einer ersten Anforderung und einer ersten Handhabungsanweisung für die Anforderung für einen Proxy zum Weiterleiten der ersten Anforderung zu einem ersten Ziel, wobei die erste Handhabungsanweisung anweist, ob es dem Proxy erlaubt ist, das Weiterleiten der ersten Anforderung zu einem ersten Ziel erneut zu versuchen oder nicht, wenn der Proxy eine erste Erfolgsanzeige vom ersten Ziel nicht empfängt, die anzeigt, dass die Anforderung erfolgreich ausgeführt wurde.

7. Vorrichtung nach Anspruch 6, wobei der Anforderer ferner zu Folgendem ausgelegt ist
Überwachen, ob der Anforderer eine Anzeige vom Proxy empfängt, dass der Proxy die erste Erfolgsanzeige nicht empfangen hat;
Bilden einer zweiten Anforderung auf Basis der ersten Anforderung, wenn der Anforderer die Anzeige vom Proxy empfangen hat, dass der Proxy die erste Erfolgsanzeige nicht empfangen hat;
Bereitstellen der zweiten Anforderung und einer zweiten Handhabungsanweisung für den Proxy; wobei
sich die zweite Handhabungsanweisung von der ersten Handhabungsanweisung unterscheidet, und
die zweite Handhabungsanweisung anweist, ob es dem Proxy erlaubt ist, das Weiterleiten der zweiten Anforderung zu einem dritten Ziel erneut zu versuchen oder nicht, wenn der Proxy eine zweite Erfolgsanzeige, die anzeigt, dass die zweite Anforderung erfolgreich ausgeführt wurde, nicht empfängt.

8. Vorrichtung nach Anspruch 7, wobei mindestens eines von Folgendem gilt:
das dritte Ziel ist dasselbe wie das erste Ziel; oder
die zweite Anforderung unterscheidet sich von der ersten Anforderung.

9. Vorrichtung nach einem der Ansprüche 7 und 8, wobei der Anforderer ferner dazu ausgelegt ist zu überwachen, ob die empfangene Anzeige vom Proxy, dass der Proxy die erste Erfolgsanzeige empfangen hat, eine Kennung des ersten Ziels umfasst.

10. Vorrichtung nach einem der Ansprüche 6 bis 9, wobei der Anforderer eine Abrechnungsauslösefunktion umfasst, die erste Anforderung eine Abrechnungsanforderung ist, und die erste Anforderung eine Anzeige umfasst, ob die erste Anforderung eine Neuübertragung einer anderen Abrechnungsanforderung ist oder nicht.

11. Vorrichtung nach Anspruch 10, die von einem der Ansprüche 7 bis 9 abhängig ist, wobei
die erste Abrechnungsanforderung eine Anzeige umfasst, dass die erste Abrechnungsanforderung keine Neuübertragung einer anderen Abrechnungsanforderung ist; und
das Bilden der zweiten Anforderung auf Basis der ersten Anforderung das Bilden der zweiten Anforderung als eine zweite Abrechnungsanforderung umfasst, die die Anzeige umfasst, dass die zweite Anforderung eine Neuübertragung einer anderen Abrechnungsanforderung ist.

12. Vorrichtung nach Anspruch 11, wobei
die erste Abrechnungsanforderung Abrechnungsanweisungen umfasst; und
die zweite Abrechnungsanforderung die Abrechnungsanweisungen umfasst.

13. Vorrichtung nach einem der Ansprüche 6 bis 12, wobei mindestens eines von Folgendem gilt:
• der Anforderer umfasst einen Dienstverbraucher oder einen anderen Proxy oder einen Client; oder
• das erste Ziel umfasst einen Dienstproduzenten oder einen weiteren Proxy oder einen Server.

14. Verfahren, das von einem Proxy durchgeführt wird und Folgendes umfasst:
Überwachen (S110), ob der Proxy eine Anforderung und eine Handhabungsanweisung für die Anforderung von einem Anforderer empfängt;
Weiterleiten (S115) der Anforderung vom Proxy zu einem ersten Ziel, wenn der Proxy die Anforderung empfängt;
Prüfen (S120), ob der Proxy in Reaktion auf das Weiterleiten der Anforderung zum ersten Ziel eine Erfolgsanzeige vom ersten Ziel empfängt, die anzeigt, dass die Anforderung erfolgreich ausgeführt wurde;
Handhaben (S130) der Anforderung gemäß der Handhabungsanweisung, wenn der Proxy die Handhabungsanweisung empfängt und der Proxy die Erfolgsanzeige nicht empfängt; wobei
die Handhabungsanweisung anweist, ob es dem Proxy erlaubt ist, das Weiterleiten der Anforderung zum ersten Ziel erneut zu versuchen oder nicht.

15. Verfahren, das von einem Anforderer durchgeführt wird und Folgendes umfasst:
Bereitstellen (S210) einer ersten Anforderung und einer ersten Handhabungsanweisung für die Anforderung durch den Anforderer für einen Proxy zum Weiterleiten der ersten Anforderung zu einem ersten Ziel, wobei die erste Handhabungsanweisung anweist, ob es dem Proxy erlaubt ist, das Weiterleiten der ersten Anforderung zum ersten Ziel erneut zu versuchen oder nicht, wenn der Proxy eine erste Erfolgsanzeige vom ersten Ziel nicht empfängt, die anzeigt, dass die Anforderung erfolgreich ausgeführt wurde.

16. Computerprogrammprodukt, das einen Satz von Anweisungen umfasst, der, wenn er in einer Vorrichtung ausgeführt wird, dazu ausgelegt ist, die Vorrichtung zu veranlassen, das Verfahren nach einem der Ansprüche 14 und 15 umzusetzen.

## Revendications

1. Appareil comprenant un mandataire configuré pour :
surveiller (S110) le mandataire pour savoir s'il reçoit d'un demandeur une demande et une instruction de traitement pour la demande ;
transférer (S115) la demande du mandataire à une première cible si le mandataire reçoit la demande ;
vérifier (S120) si le mandataire reçoit, en réponse au transfert de la demande à la première cible, une indication de succès de la première cible indiquant que la demande a été exécutée avec succès ;
traiter (S130) la demande selon l'instruction de traitement si le mandataire reçoit l'instruction de traitement et que le mandataire ne reçoit pas l'indication de succès ; dans lequel
l'instruction de traitement indique si le mandataire est autorisé ou non à réessayer de transférer la demande à la première cible.

2. Appareil selon la revendication 1, dans lequel le mandataire est en outre configuré pour informer le demandeur sur un identifiant de la première cible si le mandataire ne reçoit pas l'indication de succès.

3. Appareil selon l'une des revendications 1 et 2, dans lequel l'indication de succès comprend un accusé de réception de la première cible en réponse au transfert de la demande à la première cible.

4. Appareil selon l'une des revendications 1 à 3, dans lequel le mandataire comprend un mandataire de communication de service ou un mandataire de protection de périphérie de service.

5. Appareil selon l'une des revendications 1 à 4, dans lequel au moins un des cas suivants est vrai :
• le demandeur comprend un consommateur de services, un autre mandataire ou un client ; ou
• la première cible comprend un producteur de services, un mandataire supplémentaire ou un serveur.

6. Appareil comprenant un demandeur configuré pour :
fournir (S210) une première demande et une première instruction de traitement pour la première demande à un mandataire pour transférer la première demande à une première cible,
dans lequel la première instruction de traitement indique si le mandataire est autorisé ou non à réessayer de transférer la première demande à une première cible si le mandataire ne reçoit pas une première indication de succès de la première cible indiquant que la première demande a été exécutée avec succès.

7. Appareil selon la revendication 6, dans lequel le demandeur est en outre configuré pour
surveiller le demandeur pour savoir s'il reçoit une indication du mandataire selon laquelle le mandataire n'a pas reçu la première indication de succès ;
former une deuxième demande sur la base de la première demande si le demandeur reçoit l'indication du mandataire selon laquelle le mandataire n'a pas reçu la première indication de succès ;
fournir la deuxième demande et une deuxième instruction de traitement au mandataire ; dans lequel
la deuxième instruction de traitement est différente de la première instruction de traitement, et
la deuxième instruction de traitement indique si le mandataire est autorisé ou non à réessayer de transférer la deuxième demande à une troisième cible si le mandataire ne reçoit pas une deuxième indication de succès indiquant que la deuxième demande a été exécutée avec succès.

8. Appareil selon la revendication 7, dans lequel au moins un des cas suivants est vrai :
la troisième cible est la même que la première cible ; ou
la deuxième demande est différente de la première demande.

9. Appareil selon l'une des revendications 7 et 8, dans lequel le demandeur est en outre configuré pour surveiller l'indication reçue du mandataire selon laquelle le mandataire n'a pas reçu la première indication de succès pour savoir si elle comprend un identifiant de la première cible.

10. Appareil selon l'une des revendications 6 à 9, dans lequel le demandeur comprend une fonction de déclenchement de facturation, la première demande est une première demande de facturation, et la première demande comprend une indication précisant si la première demande est ou non une retransmission d'une autre demande de facturation.

11. Appareil selon la revendication 10 dépendant de l'une des revendications 7 à 9, dans lequel
la première demande de facturation comprend l'indication selon laquelle la première demande de facturation n'est pas une retransmission d'une autre demande de facturation ; et
la formation de la deuxième demande sur la base de la première demande comprend la formation de la deuxième demande en tant que deuxième demande de facturation comprenant l'indication selon laquelle la deuxième demande est une retransmission d'une autre demande de facturation.

12. Appareil selon la revendication 11, dans lequel
la première demande de facturation comprend des instructions de facturation ; et
la deuxième demande de facturation comprend les instructions de facturation.

13. Appareil selon l'une des revendications 6 à 12, dans lequel au moins un des cas suivants est vrai :
• le demandeur comprend un consommateur de services, un autre mandataire ou un client ; ou
• la première cible comprend un producteur de services, un mandataire supplémentaire ou un serveur.

14. Procédé réalisé par un mandataire comprenant les étapes suivantes :
surveiller (S110) le mandataire pour savoir s'il reçoit d'un demandeur une demande et une instruction de traitement pour la demande ;
transférer (S115) la demande du mandataire à une première cible si le mandataire reçoit la demande ;
vérifier (S120) si le mandataire reçoit, en réponse au transfert de la demande à la première cible, une indication de succès de la première cible indiquant que la demande a été exécutée avec succès ;
si le mandataire reçoit l'instruction de traitement et que le mandataire ne reçoit pas l'indication de succès : traiter (S130) la demande selon l'instruction de traitement ; dans lequel
l'instruction de traitement indique si le mandataire est autorisé ou non à réessayer de transférer la demande à la première cible.

15. Procédé réalisé par une demandeur comprenant :
fournir (S210), par une demandeur, une première demande et une première instruction de traitement pour la première demande à un mandataire pour transférer la première demande à une première cible,
dans lequel
la première instruction de traitement indique si le mandataire est autorisé ou non à réessayer de transférer la première demande à la première cible si le mandataire ne reçoit pas une première indication de succès de la première cible indiquant que la première demande a été exécutée avec succès

16. Produit de programme informatique comprenant un ensemble d'instructions qui, lorsqu'elles sont exécutées sur un appareil, est configuré pour amener l'appareil à mettre en œuvre le procédé selon l'une des revendications 14 et 15.
